# EUROPÄISCHE PATENTSCHRIFT

(11) **EP 3 011 811 B1**
(45) Veröffentlichungstag und Bekanntmachung des Hinweises auf die Patenterteilung: **07.06.2017**
(21) Anmeldenummer: 15188717.1
(22) Anmeldetag: 07.10.2015
(51) Int. Cl.: A01B 3/46

(54) **PFLUG**
PLOUGH
CHARRUE

(30) Priorität: 07.10.2014 DE 202014008067 U
(43) Veröffentlichungstag der Anmeldung: 27.04.2016
(73) Patentinhaber: PÖTTINGER Landtechnik GmbH, 4710 Grieskirchen (AT)
(72) Erfinder: Baldinger, Markus, 4084 St. Agatha (AT); Baldinger, Martin, 4722 Peuerbach (AT); Baldinger, Friedrich, 4600 Wels (AT); Trummer, Martin, 4511 Allhaming (AT); Edelbauer, Roland, 4600 Thalheim (AT); Preimeß, Hans-Jörg, 9811 Lendorf (AT); Hofinger, Markus, 4721 Altschwendt (AT)
(74) Vertreter: Thoma, Michael

(56) Entgegenhaltungen:
- AT-B- 301 230
- DE-A1-102014 206 233
- DE-U- 6 603 209

## Beschreibung

Die vorliegende Erfindung betrifft einen Pflug mit einer Anbauvorrichtung zum Anbau an einen Schlepper, zumindest einer Pflugscharreihe sowie einem Fahrwerk mit zumindest einem Pflugrad zum Abstützen am Boden, wobei ein Radantrieb zum Antreiben des Rads vorgesehen ist.

Derartige Pflüge können als Aufsattelpflug oder als Anbaupflug ausgebildet sein und werden üblicherweise mittels einer Deichsel oder einem Anbaubock, an dem eine Dreipunktanlenkung befestigbar ist, an einen Schlepper angebaut, der den Pflug üblicherweise hinter sich herzieht oder bei bestimmten Ausbildungsformen auch vor oder neben sich herschieben kann.

Um höhere Flächenleistungen zu erzielen, werden in jüngerer Zeit immer größere Pflugbreiten durch vielscharige Ausbildung der Pflugscharreihen verwendet, wofür jedoch immer größere und stärkere Schlepper benötigt werden, um die notwendige Zug- und Antriebskraft bereitstellen zu können. Auf schwierigem, insbesondere feuchten und traktionsreduzierenden Böden stoßen jedoch auch größere Schlepper an ihre Grenzen, da auch bei Allradantrieb des Schleppers dessen Antriebskraft nicht mehr auf den Boden gebracht werden kann und der Radschlupf am Schlepper zu groß wird. Diese Problematik wird bei Pflügen noch dadurch verschärft, dass Pflüge dazu neigen, im Arbeitsbetrieb nicht einfach geradeaus zu laufen, sondern einen recht hohen Querzug auf den Schlepper ausüben, der durch Gegenlenken am Schlepper kompensiert werden muss. Hierdurch kommt es zu einer weiteren Vergrößerung des Radschlupfs am Schlepper, da der Schlepper bei an sich gerade Fahrgasse mit eingelenkten Rädern gefahren wird, wodurch die Schlepperräder auch noch quer zur eigentlich geraden Fahrtrichtung radieren.

Um die Traktionsprobleme am Schlepper zu reduzieren, wurde bereits vorgeschlagen, das Pflugrad, mittels dessen der Pflug am Boden abgestützt wird, ebenfalls anzutreiben. Solche Pflüge mit angetriebenen Pflugrädern zeigen beispielsweise die Schriften AT 301230 B, DE 19628031 A1 und DE 69217278 T2. Einen Pflug mit hydraulisch höhenverstellbaren Stützrädern zeigt die DE 66 03 209 U.

Die Steuerung der Radantriebe berücksichtigt dabei zumeist den Arbeits- und Nichtarbeitsbetrieb, wobei der Pflugradantrieb zugeschaltet wird, wenn der Pflug in Arbeitsstellung und der Radantrieb abgeschaltet wird, wenn der Pflug in Transport- oder Vorgewendestellung ist. Im Pflugbetrieb wird dabei die Radgeschwindigkeit des Pflugrads konstant gehalten oder an die Drehzahl der Schlepperzapfwelle angepasst, vgl. AT 301230 B. Dabei können im Pflugbetrieb mehrere Pflugräder eines Pflugs drehzahlsynchron angetrieben werden beziehungsweise Drehzahldifferenzen zwischen den Pflugrädern mit einer Differenzialsperre gesperrt werden, um den Radschlupf zu begrenzen, vgl. DE 69217278 T2.

Aus der EP 2502477 A1 ist ferner ein Bodenbearbeitungsgerät in Form einer Scheibenegge beziehungsweise eines Grubbers mit einer antreibbaren Nachlaufwalze bekannt, wobei für den Antrieb der Nachlaufwalze der Schlepperradschlupf, die Hangneigung sowie die Arbeitstiefe berücksichtigt werden. Dieser weitergehendere Steueransatz lässt jedoch die bei Pflügen auftretende Problematik des Querzugs weitgehend ungelöst.

Der vorliegenden Erfindung liegt daher die Aufgabe zugrunde, einen verbesserten Pflug der genannten Art zu schaffen, der Nachteile des Standes der Technik vermeidet und letzteren in vorteilhafter Weise weiterbildet. Insbesondere soll eine verbesserte Steuerung des Pflugrads geschaffen werden, mit Hilfe derer der Pflug mit kleineren und leichteren Schleppern gefahren werden kann und übermäßiger Schlupf am Schlepper reduziert wird.

Erfindungsgemäß wird die genannte Aufgabe durch einen Pflug gemäß Anspruch 1 gelöst. Bevorzugte Ausgestaltungen der Erfindung sind Gegenstand der abhängigen Ansprüche.

Es wird also vorgeschlagen, das angetriebene Pflugrad beziehungsweise ggfs. die mehreren angetriebenen Pflugräder derart einzulenken, dass der Querzug des Pflugs auf den Schlepper möglichst klein wird, sodass der Schlepper ohne beziehungsweise mit möglichst wenig Gegenlenken gefahren werden kann. Hierdurch wird ein Querradieren der Schlepperräder reduziert, wodurch die in Fahrtrichtung auf den Boden bringbare Zugkraft des Schleppers erhöht wird. Dabei kann das Antriebsmoment und die Drehzahl des Pflugrads so geregelt werden, dass die vom Schlepper auf den Pflug gegebene Zugkraft möglichst gering wird, wodurch der Schlepperradschlupf in Fahrtrichtung weiter reduziert werden kann. Erfindungsgemäß zeichnet sich der Pflug dadurch aus, dass ein Lenkaktor zum Einlenken des Pflugrads und eine Lenkwinkel-Steuervorrichtung zum Ansteuern des Lenkaktors in Abhängigkeit eines Betriebsparameters, der den Querzug des Pflugs auf den Schlepper quer zur Fahrtrichtung charakterisiert, vorgesehen sind, wobei die genannte Lenkwinkel-Steuervorrichtung derart ausgebildet ist, dass das Rad derart eingeschlagen wird, dass der den Querzug angebende Betriebsparameter bzw. dessen Abweichung von einem Sollwert minimal wird.

Durch diese Lenkwinkelregelung am angetriebenen Pflugrad kann das am Schlepper erforderliche Gegenlenken minimiert und das Radieren der Schlepperräder quer zur Fahrtrichtung reduziert werden, sodass bei an sich gleicher Scharanzahl mit einem kleineren Schlepper mit einem geringeren Traktorgewicht und einem optimierten Spritverbrauch gefahren werden kann.

Der für das Einschlagen des Pflugrads berücksichtigte Querzug des Pflugs auf den Schlepper kann dabei direkt oder indirekt bestimmt werden. In Weiterbildung der Erfindung kann dabei die genannte Lenkwinkel-Steuervorrichtung einen Schlepperlenkwinkel berücksichtigen und das Pflugrad derart einlenken, dass der Schlepperlenkwinkel minimal wird. Insbesondere kann das Pflugrad derart automatisch in Abhängigkeit des Schlepperlenkwinkels eingelenkt werden, dass der Schlepper zumindest näherungsweise mit dem Lenkwinkel 0°, das heißt Räderstellung für Geradeausfahrt gefahren werden kann, was auf der Überlegung beruht, dass Fahrgassen beim Pflügen üblicherweise einen geradlinigen Verlauf haben sollen. Ein Lenkwinkelsignal des Schleppers kann auf einen Lenkwinkel-Signaleingang der Lenkwinkel-Steuervorrichtung zum Ansteuern des Pflugrads gegeben werden, wobei die genannte Lenkwinkel-Steuervorrichtung das Pflugrad unter Berücksichtigung des Schlepperlenkwinkel derart einlenkt, dass der Schlepperlenkwinkel möglichst gering wird.

Alternativ oder zusätzlich zu einer Berücksichtigung des Schlepperlenkwinkels kann auch ein sogenanntes Estimated Curvature-Signal des Schleppers für das Einlenken des Pflugrads berücksichtigt werden. Moderne Schlepper beziehungsweise deren Steuerungsmodule stellen oft das Signal des vom Schlepper gefahrenen Kurvenradius, insbesondere eines geschätzten Kurvenradius bereit, wobei dieses Signal hauptsächlich auf dem Lenkwinkel der Schlepperräder beruht, aber auch weitere Parameter wie beispielsweise Geschwindigkeit oder Raddrehzahldifferenzen des Schleppers und dergleichen berücksichtigen kann. Wird ein solches Kurvenradiussignal bereitgestellt, kann die Lenkwinkel-Steuervorrichtung zum Ansteuern des Lenkaktors des Pflugs einen Kurvenradius-Steuersignaleingang besitzen, auf den das Kurvenradiussignal beziehungsweise das Estimated Curvature-Signal gegeben wird. Entsprechende Steuermittel können dann den Lenkwinkel des Pflugrads so steuern, dass das Kurvenradiussignal des Schleppers maximal wird beziehungsweise gegen unendlich geht, was faktisch einer Geradeausfahrt des Schleppers entspricht beziehungsweise diesem Geradeausfahrzustand nahekommt.

Alternativ oder zusätzlich kann mittels einer geeigneten Querkraftsensorik auch die an der Anbauvorrichtung tatsächlich wirkende Querkraft quer zur Fahrtrichtung direkt oder indirekt gemessen werden, wobei die Querkraftsensorik hier vorzugsweise die horizontalen Querkräfte misst, die in der Anbauvorrichtung des Pflugs und/oder in der damit zusammenwirkenden Anbauvorrichtung des Schleppers wirken. Je nach Ausbildung der Anbauvorrichtung können dies beispielsweise Kräfte in Lenkern des pflugseitigen Anbaubocks und/oder Kräfte in Lenkern der schlepperseitigen Anbauvorrichtung sein.

Das von der Querkraftsensorik bereitgestellte Querzugsignal wird auf einen Querkraft-Signaleingang der Lenkwinkel-Steuervorrichtung gegeben, die entsprechende Steuermittel zum Ansteuern des Lenkaktors des Pflugrads derart, dass die ermittelten Querkräfte minimiert werden, aufweist.

Die genannte Querkraftsensorik kann hierzu den Unterlenkern der schlepperseitigen und/oder pflugseitigen Anbauvorrichtung zugeordnete Kraftsensorelemente umfassen, die Zug- und/oder Druckkräfte in den genannten Unterlenkern erfassen. Die Lenkwinkelsteuervorrichtung kann das Pflugrad in Abhängigkeit dieser ermittelten Zug- und/oder Druckkräfte in den Unterlenkern derart ansteuern, dass die genannten Kräfte in den Unterlenkern möglichst gleich groß sind, das heißt die Differenz einer Zug-/Druckkraft in einem rechten Unterlenker und der Zug-/Druckkraft in einem linken Unterlenker möglichst klein wird, was ein Zeichen dafür ist, dass der Querzug des Pflugs minimiert wird.

Gemäß einem weiteren Aspekt werden auch das Drehmoment und die Drehzahl des angetriebenen Pflugrads so geregelt, dass vom Schlepper eine möglichst geringe Zugkraft aufzubringen ist, wodurch der am Schlepper auftretende Schlepperradschlupf minimiert wird. Hierzu ist eine Radantriebs-Steuervorrichtung zum Steuern des Drehmoments und der Drehzahl des Pflugradantriebs in Abhängigkeit einer vom Schlepper in die Anbauvorrichtung induzierten Zugkraft und eines Radschlupfs des Pflugrads vorgesehen, wobei die Radantriebssteuervorrichtung einen Drehmomentregler zum Regeln des Radantrieb-Drehmoments derart, dass die Zugkraft in der Anbauvorrichtung minimal wird, und einen Drehzahlregler zum Regeln der Radantrieb-Drehzahl derart, dass der Pflugradschlupf minimal wird, aufweist. Während der Drehmomentregler also versucht, das Drehmoment am Pflugrad so groß wie möglich beziehungsweise so groß zu fahren, das die vom Schlepper in die Anbauvorrichtung induzierte Zugkraft möglichst klein wird, begrenzt der Drehzahlregler die Drehzahl des Pflugrads, um einen Pflugradschlupf möglichst zu vermeiden. Durch dieses Zusammenspiel von Drehmoment- und Drehzahlregelung kann das angetriebene Pflugrad den Vortrieb des Pflugs bestmöglich unterstützen und dadurch die vom Schlepper benötigten Zugkräfte und damit die Neigung des Schleppers zu Schlepperradschlupf minimieren.

Die Drehmomentregelung berücksichtigt dabei die Leistungsgrenzen des Pflugradantriebs, das heißt sobald der Pflugradantriebsmotor sein maximales Drehmoment abgibt, kann die vom Schlepper in die Anbauvorrichtung induzierte Zugkraft nicht weiter reduziert werden, da keine weitere Drehmomenterhöhung am Pflugrad möglich ist. Solange jedoch die Drehmomentgrenze des Pflugradantriebs noch nicht ausgeschöpft ist, wird das Drehmoment so lange erhöht, bis die Zugkraft des Schleppers in der Anbauvorrichtung gegen Null geht. Vorteilhafterweise ist der Drehmomentregler dabei derart ausgebildet, dass er das Drehmoment begrenzt beziehungsweise nicht weiter erhöht, wenn die Zugkraft tatsächlich Null bzw. kleiner als ein vorbestimmter Minimal-Sollwert ist, das heißt es werden keine Schubkräfte am Pflug erzeugt, die sozusagen als negative Zugkraft beziehungsweise Schubkraft auf den Schlepper wirken würden.

Zum anderen wird die Drehzahl des Pflugradantriebs bei der Regelung des Pfluradantriebs berücksichtigt. Tritt Pflugradschlupf auf, wird der Radantrieb hinsichtlich seiner Drehzahl begrenzt und nicht weiter in seiner Leistung hochgefahren, um Pflugradschlupf weitgehend zu vermeiden.

Ein solcher Pflugradschlupf kann beispielsweise durch Abgleich der Radumfangsgeschwindigkeit des Pflugrads mit den Umfangsgeschwindigkeiten der Schlepperräder erfolgen. Hierbei kann beispielsweise ein Fahrgeschwindigkeitssignal, das vom Schlepper bereitgestellt wird, verwendet werden. Alternativ oder zusätzlich kann auch am Pflug ein eigener Fahrgeschwindigkeitssensor vorgesehen sein, beispielsweise in Form eines Radarsensors für die Fahrgeschwindigkeit über Grund, die der tatsächlichen Fahrgeschwindigkeit entspricht. Wird festgestellt, dass die Radumfangsgeschwindigkeit die tatsächliche Fahrgeschwindigkeit überschreitet, insbesondere um ein vorbestimmtes Maß überschreitet, kann die Drehzahlbegrenzung am Pflugrad einsetzen.

Der Pflugradantrieb kann dabei grundsätzlich verschieden ausgebildet sein. Um eine schnell ansprechende, ansteuerungstechnisch einfache Regelbarkeit zu erzielen, kann an dem Pflug zumindest ein Radantrieb mit einem Elektromotor zum Antreiben des zumindest einen Pflugrads vorgesehen. Durch einen Elektromotor kann die Antriebsenergie ohne aufwändigen mechanischen Antriebsstrang, der von der Zapfwelle des Schleppers her angetrieben werden müsste, an das anzutreibende Rad gebracht werden, da lediglich eine Stromleitung vorzusehen ist. Dementsprechend kann für das Anbaugerät insgesamt betrachtet eine kompakte und leichte Bauweise beibehalten werden. Zudem kann ein Elektromotor mit einfachen Mitteln hinsichtlich Drehzahl und Antriebsmoment unabhängig vom Betriebspunkt des Schleppers gesteuert werden.

In Weiterbildung der Erfindung kann der Radantrieb als Einzelradantrieb ausgebildet sein, wobei je nach Ausbildung des Pflugs ggf. mehrere Radelemente mit jeweils einem Einzelradantrieb angetrieben werden können, so dass das Anbaugerät mehrere Einzelradantriebe besitzt. Alternativ ist es jedoch auch möglich, einen gemeinsamen Motor zum Antrieb mehrerer gruppenweise zusammengefasster Radelemente zu verwenden, wobei in diesem Fall vorteilhafterweise von dem gemeinsamen Motor ein verzweigter Antriebsstrang beispielsweise zu den Radelementen rechts und links an einer gemeinsamen Achse vorgesehen sein kann. Bevorzugt ist jedoch ein Einzelradantrieb in der vorgenannten Weise, bei dem jedem Radelement ein separater Einzelradantrieb zugeordnet ist, wobei hier sinnvollerweise als Radelement auch ein Zwillingsrad verstanden werden kann. Radelement meint in diesem Fall dann die an einem Fahrwerkspunkt gemeinsam aufgehängten Räder. AIternativ kann das Anbaugerät jedoch auch nur ein angetriebenes Rad besitzen, dem dann ebenfalls ein elektrischer oder hydraulischer, ggf. auch pneumatischer Motor als Antrieb zugeordnet ist.

Grundsätzlich kann der Motor hierbei in verschiedener Weise mit dem anzutreibenden Radelement gekoppelt sein, wobei beispielsweise ein von dem Rad beabstandet platzierter Motor mittels einer Antriebswelle das Rad antreiben kann. In Weiterbildung der Erfindung jedoch ist der jeweilige Radantrieb als Radnabenantrieb ausgebildet, bei dem der Motor ggf. zusammen mit einer Getriebestufe oder einem Motorgetriebe unmittelbar an der Radnabe sitzend angeordnet ist und vorteilhafterweise in den Radnabenkorpus integriert sein kann. Hierdurch werden entsprechende Antriebsstrangteile und Übertragungselemente wie längere Antriebswellen eingespart, wobei die einfache Energiezufuhr über Elektroleitungen voll zum Tragen kommen.

Je nach Ausbildung des Pflugs und je nach Betriebssituation kann es vorteilhaft sein, den Pflugradantrieb hinsichtlich seines Drehmoments und/oder seiner LEistung so zu dimensionieren, dass zumindest ein größerer Teil der Antriebsenergie für den Pflug durch dessen eigenen Radantrieb aufgebracht werden kann und/oder vom Schlepper her nur der kleinere Teil der Antriebsenergie für den Vorschub des Pflugs aufgebracht werden muss. Gegebenennfalls kann der Pflugradantrieb auch vollständig die vom Pflug benötigte Antreibsenergie aufbringen. Um eine kleine Dimensionierung des Radantriebs am Anbaugerät beibehalten zu können, kann es jedoch vorteilhaft sein, diesen Pflugradantrieb nur als Zusatzantrieb auszubilden und den größeren Teil der benötigten Zugkraft vom Schlepper her aufzubringen.

Die Erfindung wird nachfolgend anhand eines Ausführungsbeispiels und zugehöriger Zeichnungen näher erläutert. In den Zeichnungen zeigen:

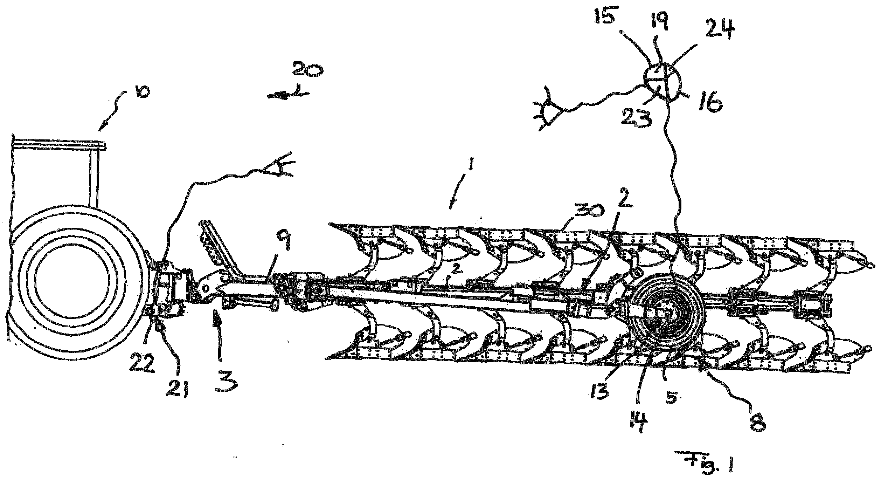

- Fig. 1:: Eine schematische Seitenansicht eines Pflugs nach einer vorteilhaften Ausführungsform der Erfindung, wobei der Pflug als Wendepflug ausgebildet ist und ein angetriebenes Pflugrad besitzt, und
- Fig. 2:: Eine schematische Draufsicht auf den Pflug aus Figur 1.

Der in den Figuren gezeigte Pflug 1 ist als Wendepflug in Form eines Aufsattelpflugs ausgebildet, kann alternativ jedoch auch als Anbaupflug, der gewendet oder nicht gewendet werden kann, ausgebildet sein. Der Pflug 1 umfasst dabei einen Pflugrahmen 2, der mittels einer Anbauvorrichtung 3 an einen Schlepper 10 heckseitig angebaut werden kann. Die genannte Anbauvorrichtung 3 kann hierbei grundsätzlich verschieden ausgebildet sein, wobei beispielsweise eine Pflugdeichsel 9 um eine aufrechte Achse schwenkbar an einem Anbaubock angelenkt sein kann, der mittels Unterlenker 11 und Oberlenker 12 am Schlepper 10 befestigt sein kann und den schlepperseitigen Teil der Anbauvorrichtung bilden kann. Alternativ könnte jedoch auch ein Anbaupflug mit einem Anbaubock an den genannten Unter- und Oberlenkern angebaut sein, sodass der Pflug insgesamt ausgehoben werden könnte.

Der in den Figuren gezeigte Pflug 1 umfasst zwei Reihen von Pflugscharen 30, die wechselweise durch Wenden des Pflugs, das heißt Verschwenken des Pflugrahmens 2 mit den daran angebrachten Pflugscharreihen in Einsatz gebracht werden können, um in beiden Fahrtrichtungen entsprechend Pflügen zu können.

Der Pflugrahmen 2 ist durch ein Fahrwerk 8, das ein Pflugrad 4 umfasst, am Boden abgestützt, wobei der Pflugrahmen 2 über das genannte Pflugrad 4 hinweggeschwenkt und dadurch gewendet werden kann. Das Pflugrad 4 ist hierzu mit dem Pflugrahmen 2 über einen Radträger 5 verbunden, wobei der genannte Radträger 5 mit dem Pflugrad 4 um eine liegende, in Fahrtrichtung weisende Schwenkachse 60 verbunden sein kann, um das Wenden des Pflugrahmens 2 zu ermöglichen.

Ferner ist das genannte Pflugrad 4 um eine aufrechte Lenkachse 7 gegenüber dem Radträger 5 lenkbar, wobei zum Einschlagen des Pflugrades 4 um die genannte Lenkachse 7 ein Lenkaktor 6 vorgesehen sein kann, der fremdenergiebetätigt den Lenkwinkel des Pflugrads 4 einstellen kann. Der genannte Lenkaktor 6 kann hierbei verschieden ausgebildet sein, beispielsweise einen Elektromotor umfassen, der eine Zahnstange treibt, welche den Lenkwinkel verstellt. Alternativ kann auch ein Hydraulikaktor vorgesehen sein, beispielsweise in Form eines Hydraulikzylinders. Alternativ oder zusätzlich können auch Elektro- oder Hydraulikmotoren, die eine Motorwelle umfassen, über eine Getriebestufe den Lenkwinkel verändern.

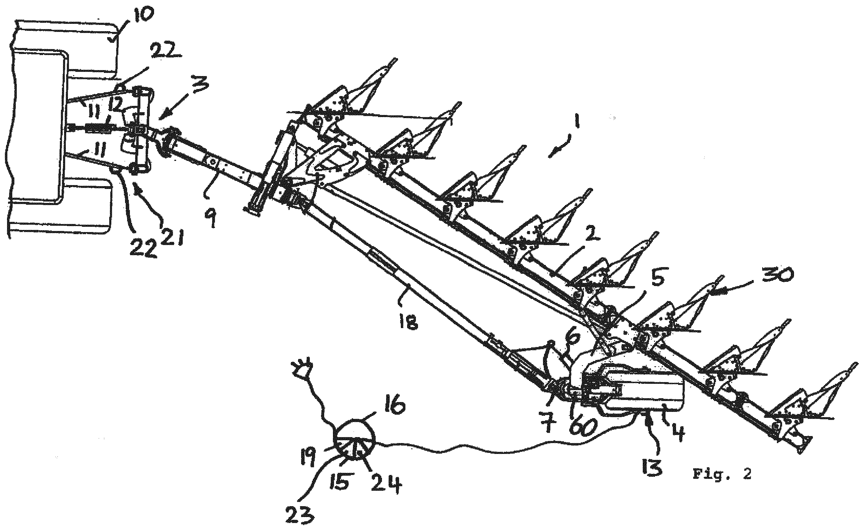

Wie Fig. 2 zeigt, kann der Radträger 5 mit dem daran angelenkten Pflugrad 4 über einen Stabilisator 18 gegenüber dem Pflugrahmen beziehungsweise der Anbauvorrichtung 3 stabilisiert sein. Der Pflug 1 umfasst ferner in an sich bekannter Weise weitere Stellglieder, um Pflugparameter wie Vorfurchenbreite, Schnittbreite, Schnitttiefe etc. einstellen zu können.

Ferner ist dem Pflugrad 4 ein Radantrieb 13 zugeordnet, um das Pflugrad 4 antreiben zu können. Dieser Radantrieb 13 kann prinzipiell verschieden ausgebildet sein, beispielsweise in Form eines Hydraulikantriebs. Vorteilhafterweise kann jedoch ein Elektroantrieb vorgesehen sein, der direkt dem Pflugrad 4 zugeordnet ist beziehungsweise einen Direktantrieb bildet, der der Radachse des Pflugrads 4 zugeordnet ist. Beispielsweise kann ein Elektromotor 14 des Radantriebs 13 in der Radnabe des Pflugrads 4 angeordnet oder in anderer Weise in das Pflugrad 4 integriert sein, beispielsweise in einem vom Reifen beziehungsweise der Felge des Pflugrads 4 umschlossenen Radinnenraum vorgesehen sein. Die Versorgung des Elektromotors 14 kann vom Schlepper 10 her erfolgen, wobei die Steuerung des Elektromotors 14 von einer Steuervorrichtung 15 bewerkstelligt werden kann, die beispielsweise in Form eines Jobrechners an dem Pflug 1 vorgesehen sein kann.

Die genannte Radantriebs-Steuervorrichtung 15 umfasst, wie dies Fig. 2 schematisch zeigt, einen Drehmomentregler 19, der das Drehmoment des Radantriebs 13 derart steuert beziehungsweise regelt, dass die vom Schlepper 10 auf den Pflug 1 gegebene Zugkraft in Fahrtrichtung 20 möglichst gering wird. Umgekehrt ausgedrückt versucht der Drehmomentregler 19 den Pflug 1 immer möglichst stark anzuschieben, sodass vom Schlepper 10 her möglichst wenig Zugkraft benötigt wird. Dabei begrenzt der Drehmomentregler 19 das Drehmoment allerdings dann, wenn die vom Schlepper 10 auf den Pflug 1 gegebene Zugkraft tatsächlich Null wird oder sogar in das Negative geht, das heißt der Drehmomentregler 19 verhindert einen Schubbetrieb, in dem der Schlepper 10 den Pflug 1 bremsen müsste.

Um tatsächlich vom Schlepper 10 auf den Pflug 1 gegebene Zugkraft in Fahrtrichtung 20 überwachen beziehungsweise bestimmen zu können, kann eine Bestimmungseinrichtung 21 zum Bestimmen dieser Zugkraft der Anbauvorrichtung 3 zugeordnet sein. Beispielsweise kann die Bestimmungseinrichtung 21 Kraftsensoren 22 umfassen, die den Unterlenkern 11 und/oder dem Oberlenker 12 zugeordnet sind, wobei die genannten Kraftsensoren 22 beispielsweise auch als Fluiddrucksensoren ausgebildet sein können, wenn die genannten Unter- oder Oberlenker beispielsweise einen Hydraulikzylinder umfassen, um die Lenkerlänge verstellen zu können. Alternativ oder zusätzlich zu solchen den Unter- beziehungsweise Oberlenkern 11 und 12 zugeordneten Kraftsensoren 22 kann jedoch auch ein Kraftsensor beispielsweise in die Deichsel 9 integriert sein, wobei die Deichsel 9 hier beispielsweise ein Teleskopierstück umfassen kann, in das der Kraftsensor integriert sein kann.

Das Signal der genannten Sensorik beziehungsweise Bestimmungseinrichtung 21, das die Zugkraft des Schleppers 10 auf den Pflug 1 angibt, wird an die genannte Antriebssteuervorrichtung 15 beziehungsweise deren Drehmomentregler 19 gegeben. Der Drehmomentregler 19 steuert sodann in Abhängigkeit des erhaltenen Zugkraftsignals das Drehmoment des Radantriebs 13 derart, dass die gemessene Zugkraft gegen Null geht beziehungsweise möglichst gering wird.

Um Radschlupf am Pflugrad 4 zu vermeiden, umfasst die genannte Antriebssteuervorrichtung 15 ferner einen Drehzahlregler 23, der die Drehzahl des Radantriebs 13 dann begrenzt, wenn eine Schlupfbestimmungseinrichtung 24 einen Pflugradschlupf erfasst. Die genannte Schlupfbestimmungseinrichtung 24 kann beispielsweise einen Geschwindigkeitssensor, beispielsweise in Form eines Radarsensors, zur Bestimmung der Pfluggeschwindigkeit über Grund, also der tatsächlichen Pfluggeschwindigkeit umfassen. Wird anhand der tatsächlichen Drehzahl des Pflugrads 4, die aus einem geeigneten Raddrehzahlsensor erhalten werden kann, festgestellt, dass die Umfangsgeschwindigkeit des Pflugrads 4 größer ist als die tatsächliche Pfluggeschwindigkeit beziehungsweise die tatsächliche Pfluggeschwindigkeit um einen vorgegebenen Schwellenwert überschreitet, dann kann der Drehzahlregler 23 eingreifen und die Raddrehzahl des Pflugrads 4 begrenzen, insbesondere derart, dass die Umfangsgeschwindigkeit des Pflugrads 4 im Wesentlichen der tatsächlichen Pfluggeschwindigkeit entspricht oder beispielsweise einem geringfügig höheren Wert, beispielsweise 110 Prozent der tatsächlichen Pfluggeschwindigkeit. Der genannte Drehzahlregler 23 greift hierzu in die Ansteuerung des Radantriebs 13 ein, beispielsweise durch entsprechendes Ansteuern eines Frequenzumrichters.

Um den Lenkwinkel des Pflugrads 4 steuern zu können, ist eine Lenkwinkel-Steuervorrichtung 16 vorgesehen, die in Abhängigkeit eines Querzugs des Pflugs 1 arbeitet beziehungsweise diesen Querzug des Pflugs 1 auf den Schlepper 10 quer zur Fahrtrichtung 20 möglichst zu kompensieren versucht.

Hierzu wird der genannten Lenkwinkel-Steuervorrichtung 16 ein Betriebsparameter als Signal zugeführt, das ein Maß für den genannten Querzug des Pflugs 1 auf den Schlepper ist beziehungsweise diesen Querzug charakterisiert.

Dieses den Querzug charakterisierende Signal kann beispielsweise aus den Signalen der Kraftsensoren 22 gewonnen werden, die den rechten und linken Unterlenkern 11 der schlepperseitigen Anbauvorrichtung zugeordnet sein können. Eine Differenz der Kräfte in den genannten rechten und linken Unterlenkern 11 ist ein Maß für den Querzug. Wird beispielsweise am linken Unterlenker eine Druckkraft festgestellt, während am rechten Unterlenker eine Zugkraft auftritt, kann davon ausgegangen werden, dass der Pflug nach links zieht. Die Lenkwinkel-Steuervorrichtung 16 steuert nun über den Lenkaktor 6 den Lenkwinkel des Pflugrades 4 derart, dass die genannte Differenz in den Zug-/Druckkräften in den Unterlenkern 11 möglichst gering wird oder umgekehrt ausgedrückt die in den Unterlenkern 11 wirkenden Kräfte möglichst gleich groß sind.

Alternativ oder zusätzlich zur Verwendung der Kraftsignale aus den Unterlenkern 11 kann der Lenkwinkel-Steuervorrichtung 16 auch ein Lenkwinkelsignal vom Schlepper 10 her zugeführt werden, das den Lenkwinkel am Schlepper angibt. Davon ausgehend, dass bei einer geraden Fahrgasse der Schlepper ohne Querzug des Pflugs 1 an sich ohne eingeschlagene Lenker beziehungsweise mit Rädern in Geradeausfahrtstellung fahren sollte, kann ein Lenkwinkeleinschlag am Schlepper 10 als Indiz für einen Querzug des Pflugs 1 gewertet werden, insbesondere dann, wenn dauerhaft beziehungsweise über einen längeren Zeitraum die Schlepperräder zur selben Seite hin eingeschlagen sind. Um bei ständig leicht hin und hergehenden Lenkbewegungen am Schlepper ein ständige hin- und hergehendes Einlenken des Pflugrads zu vermeiden, kann das Lenksignal des Schleppers hierbei von der Lenkwinkel-Steuervorrichtung 16 in geeigneter Weise bearbeitet werden, beispielsweise mittels eines Filters und/oder mittels eines Integrators, um festzustellen, ob das Lenksignal einen signifikant zu einer Seite hingehenden Einschlag zeigt. Ein Verändern des Lenkwinkels des Pflugrads kann nur dann veranlaßt werden, wenn der Schlepper-Lenkwinkel und/oder dessen Änderung signifikant ist, d.h. eine vorbestimmte Größe erreicht und/oder über eine vorbestimmte Zeitspanne vorliegt.

Die Lenkwinkel-Steuervorrichtung 16 steuert dann bei Vorliegen eines solchen Lenksignals das Pflugrad 4 derart ein, dass das Lenksignal vom Schlepper her möglichst gegen Null geht, das heißt möglichst nahe an der Geradeausfahrtstellung ist.

Alternativ oder zusätzlich zu einer solchen Verwendung des Lenkwinkelsignals des Schleppers kann auch ein Kurvenradiussignal des Schleppers, insbesondere ein sogenanntes Estimated Curvature-Signal von der Lenkwinkel-Steuervorrichtung verwendet werden, um das Pflugrad 4 hinsichtlich seines Lenkwinkels zu steuern. Dies beruht wiederum auf der Überlegung, dass ohne Querzug des Pflugs 1 das genannte Kurvenradiussignal des Schleppers an sich einen Maximalwert annehmen müsste beziehungsweise gegen unendlich gehen müsste, weil der Schlepper ohne Radeinschlag eine unendlich große Kurve beziehungsweise eine Gerade fahren müsste. Dementsprechend kann die Lenkwinkel-Steuervorrichtung 16 den Lenkaktor 6 derart ansteuern, dass das genannte Kurvenradiussignal gegen unendlich geht beziehungsweise einen möglichst großen Wert einnimmt.

## Patentansprüche

1. Pflug mit einer Anbauvorrichtung (3) zum Anbau an einen Schlepper (10), zumindest einer Pflugscharreihe (30) sowie einem Fahrwerk (8) mit zumindest einem Pflugrad (4) zum Abstützen am Boden, wobei ein Radantrieb (13) zum Antreiben des Pflugrads (4) vorgesehen ist, **dadurch gekennzeichnet, dass** ein Lenkaktor (6) zum Einschlagen des Pflugrads (4) und eine Lenkwinkel-Steuervorrichtung (16) zum Ansteuern des Lenkaktors (6) in Abhängigkeit eines Betriebsparameters, der einen Querzug des Pflugs (1) auf den Schlepper (10) quer zur Fahrtrichtung (20) charakterisiert, vorgesehen sind, wobei die Lenkwinkel-Steuervorrichtung (16) derart ausgebildet ist, dass das Pflugrad (4) derart eingeschlagen wird, dass der den Querzug des Pflugs (1) charakterisierende Betriebsparameter und/oder die Abweichung des genannten Betriebsparameters von einem Sollwert minimal wird.

2. Pflug nach dem vorhergehenden Anspruch, wobei die Lenkwinkel-Steuervorrichtung (16) einen Lenkwinkel-Signaleingang für ein Schlepper-Lenkwinkelsignal aufweist und Steuermittel zum Steuern des Lenkaktors (6) des Pflugrads (4) derart, dass der Schlepperlenkwinkel minimal wird, umfasst.

3. Pflug nach einem der vorhergehenden Ansprüche, wobei die Lenkwinkel-Steuervorrichtung (16) einen Kurvenradius-Signaleingang für ein Schlepper-Kurvenradiussignal aufweist und Steuermittel zum Steuern des Lenkaktors (6) des Pflugrads (4) derart, dass der Schlepperkurvenradius maximal wird, umfasst.

4. Pflug nach einem der vorhergehenden Ansprüche, wobei ein Querkraftsensor zum Erfassen der Querkräfte, insbesondere der horizontalen Querkräfte, der Anbauvorrichtung (3) quer zur Fahrtrichtung (20) vorgesehen ist und die Lenkwinkel-Steuervorrichtung (16) einen Querkraft-Signaleingang für ein Querkraftsignal des genannten Querkraftsensors und Steuermittel zum Steuern des Lenkaktors (6) des Pflugrads (4) derart, dass die vom Querkraftsensor erfasste Querkraft minimal wird, umfasst.

5. Pflug nach dem vorhergehenden Anspruch, wobei der Querkraftsensor den Unterlenkern (11) der Anbauvorrichtung (3) zugeordnete Kraftsensorelemente (22) zum Erfassen von Zug-/Druckkräften in den Unterlenkern (11) umfasst und die Lenkwinkel-Steuervorrichtung (16) Steuermittel zum Steuern des Lenkaktors in Abhängigkeit einer Differenz der Zug- und Druckkräfte in rechten und linken Unterlenkern (11) derart, dass die ermittelten Zug-/Druckkräfte in den Unterlenkern (11) möglichst gleich groß werden, umfasst.

6. Pflug nach dem Oberbegriff des Anspruchs 1 oder einem der vorhergehenden Ansprüche, wobei eine Radantriebs-Steuervorrichtung (15) zum Steuern des Drehmoments und der Drehzahl des Radantriebs (13) in Abhängigkeit einer vom Schlepper (10) in die Anbauvorrichtung (3) induzierten Zugkraft und eines Radschlupfs des Pflugrads (4) vorgesehen ist, wobei die Radantriebs-Steuervorrichtung (15) einen Drehmomentregler (19) zum Regeln des Radantriebsdrehmoments derart, dass die Zugkraft in der Anbauvorrichtung (3) minimal wird, und einen Drehzahlregler (23) zum Regeln der Radantriebsdrehzahl derart, dass der Pflugradschlupf minimal wird, aufweist.

7. Pflug nach dem vorhergehenden Anspruch, wobei der Drehmomentregler (19) derart ausgebildet ist, dass das Radantriebsdrehmoment dann begrenzt wird, wenn die Zugkraft in der Anbauvorrichtung (3) in Fahrtrichtung (20) Null oder negativ wird.

8. Pflug nach einem der beiden vorhergehenden Ansprüche, wobei der Drehmomentregler einen Zugkraft-Signaleingang für ein Zugkraftsignal eines der Anbauvorrichtung (3) zugeordneten Kraftsensors aufweist und das Drehmoment des Radantriebs (13) in Abhängigkeit des genannten Kraftsignals steuert.

9. Pflug nach einem der vorgehenden Ansprüche, wobei der Drehzahlregler (23) einen Fahrgeschwindigkeits-Signaleingang für ein Fahrgeschwindigkeitssignal eines Fahrgeschwindigkeitssensors und einen Radumfangsgeschwindigkeits-Signaleingang für ein Radumpfangsgeschwindigkeitssignal, dass die Radumfangsgeschwindigkeit des Pflugrads (4) angibt, aufweist und Steuermittel zum Begrenzen der Drehzahl des Radantriebs (13) dann, wenn die ermittelte Radumfangsgeschwindigkeit die Fahrgeschwindigkeit übersteigt, umfasst.

10. Pflug nach einem der vorgehenden Ansprüche, wobei der Radantrieb (13) einen Elektromotor aufweist.

11. Pflug nach einem der vorhergehenden Ansprüche, wobei der Radantrieb (13) als Einzelradantrieb ausgebildet und einem einzelnen Plugrad (4) zugeordnet ist.

12. Pflug nach einem der vorhergehenden Ansprüche, wobei der Radantrieb (13) in Form eines Radnabenantriebs ausgebildet ist, bei dem der Motor, ggf. mitsamt einem Getriebe, an der Radnabe des Rads (4) sitzend angeordnet, vorzugsweise in den Radnabenkorpus integriert ist.

## Claims

1. A plough having an attachment apparatus (3) for attachment to a tractor (10); having at least one row of ploughshares (30); and having a chassis (8) comprising at least one plough wheel (4) for supporting on the ground, wherein a wheel drive (13) is provided to drive the plough wheel (4), **characterized in that** a steering actuator (6) is provided to turn the plough wheel (4) and a steering angle control apparatus (16) is provided to control the steering actuator (6) in dependence on an operating parameter that characterizes a transverse tension of the plough (1) on the tractor (10) transversely to the direction of travel (20), with the steering angle control apparatus (16) being configured such that the plough wheel (4) is turned such that the operating parameter characterizing the transverse tension of the plough (1) and/or the deviation of the named operating parameter from a desired value become(s) minimal.

2. A plough in accordance with the preceding claim, wherein the steering angle control apparatus (16) has a steering angle signal input for a tractor steering angle signal and comprises control means for controlling the steering actuator (6) of the plough wheel (4) such that the tractor steering angle becomes minimal.

3. A plough in accordance with one of the preceding claims, wherein the steering angle control apparatus (16) has a turning radius signal input for a tractor turning radius signal and comprises control means for controlling the steering actuator (6) of the plough wheel (4) such that the tractor turning radius becomes minimal.

4. A plough in accordance with one of the preceding claims, wherein a transverse force sensor is provided for detecting the transverse forces, in particular the horizontal transverse forces, of the attachment apparatus (3) transversely to the direction of travel (20); and wherein the steering angle control apparatus (16) comprises a transverse force signal input for a transverse force signal of the named transverse force sensor and control means for controlling the steering actuator (6) of the plough wheel (4) such that the transverse force detected by the transverse force sensor becomes minimal.

5. A plough in accordance with the preceding claim, wherein the transverse force sensor comprises force sensor elements (22) associated with lower linkages (11) of the attachment apparatus (3) for detecting tensile/compression forces in the lower linkages (11); and wherein the steering angle control apparatus (16) comprises control means for controlling the steering actuator in dependence on a difference of the tensile forces and compression forces in the right and left lower linkages (11) such that the determined tensile/compression forces in the lower linkages (11) are as equal as possible.

6. A plough in accordance with the preamble of claim 1 or in accordance with one of the preceding claims, wherein a wheel drive control apparatus (15) is provided to control the torque and the speed of the wheel drive (13) in dependence on a tensile force induced into the attachment apparatus (3) by the tractor (10) and a wheel slip of the plough wheel (4), with the wheel drive control apparatus (15) having a torque regulator (19) for regulating the wheel drive torque such that the tensile force in the attachment apparatus (3) becomes minimal and having a speed regulator (23) for regulating the wheel drive speed such that the plough wheel slip becomes minimal.

7. A plough in accordance with the preceding claim, wherein the torque regulator (19) is configured such that the wheel drive torque is limited when the tensile force in the attachment apparatus (3) becomes zero or negative in the direction of travel (20).

8. A plough in accordance with one of the two preceding claims, wherein the torque regulator has a tensile force signal input for a tensile force signal of a force sensor associated with the attachment apparatus (3) and controls the torque of the wheel drive (13) in dependence on the named force signal.

9. A plough in accordance with one of the preceding claims, wherein the speed regulator (23) has a driving speed signal input for a driving speed signal of a driving speed sensor and a signal input for the speed of the wheel at the circumference for a signal of the speed of the wheel at the circumference that indicates the speed of the wheel at the circumference of the plough wheel (4) and comprises control means for limiting the speed of the wheel drive (13) when the determined speed of the wheel at the circumference exceeds the driving speed.

10. A plough in accordance with one of the preceding claims, wherein the wheel drive (13) has an electric motor.

11. A plough in accordance with one of the preceding claims, wherein the wheel drive (13) is configured as a single-wheel drive and is associated with a single plough wheel (4).

12. A plough in accordance with one of the preceding claims, wherein the wheel drive (13) is configured in the form of a wheel hub drive in which the motor, optionally together with a transmission, is arranged seated at the wheel hub of the wheel (4) and is preferably integrated into the wheel hub body.

## Revendications

1. Charrue comprenant un dispositif d'attelage (3) destiné au montage sur un tracteur (10), au moins un rang de socs de charrue (30) ainsi qu'un mécanisme de roulement (8) doté d'au moins une roue de charrue (4) destinée à l'appui au sol, un entraînement de roue (13) étant prévu pour entraîner la roue de charrue (4),
**caractérisé en ce qu'**un actionneur de direction (6) destiné au braquage de la roue de charrue (4) et un dispositif de commande d'angle de braquage (16) destiné à la commande de l'actionneur de direction (6) en fonction d'un paramètre de fonctionnement, qui caractérise une traction transversale de la charrue (1) exercée sur le tracteur (10) transversalement au sens de la marche (20), sont prévus, le dispositif de commande d'angle de braquage (16) étant réalisé de telle manière que la roue de charrue (4) est braquée de telle manière que le paramètre de fonctionnement caractérisant la traction transversale de la charrue (1) et/ou l'écart dudit paramètre de fonctionnement par rapport à une valeur de consigne devient minime.

2. Charrue selon la revendication précédente, dans laquelle le dispositif de commande d'angle de braquage (16) comporte une entrée de signal d'angle de braquage pour un signal d'angle de braquage de tracteur et comprend des moyens de commande destinés à la commande de l'actionneur de direction (6) de la roue de charrue (4) de telle manière que l'angle de braquage de tracteur devient minimal.

3. Charrue selon l'une des revendications précédentes, dans laquelle le dispositif de commande d'angle de braquage (16) comporte une entrée de signal de rayon de virage pour un signal de rayon de virage de tracteur et comprend des moyens de commande destinés à la commande de l'actionneur de direction (6) de la roue de charrue (4) de telle manière que le rayon de virage de tracteur devient maximal.

4. Charrue selon l'une des revendications précédentes, dans laquelle un capteur de force transversale est prévu pour la détection des forces transversales, en particulier des forces transversales horizontales, du dispositif d'attelage (3) exercées transversalement au sens de la marche (20) et le dispositif de commande d'angle de braquage (16) comprend une entrée de signal de force transversale pour un signal de force transversale dudit capteur de force transversale et des moyens de commande destinés à la commande de l'actionneur de direction (6) de la roue de charrue (4) de telle manière que la force transversale détectée par le capteur de force transversale devient minimale.

5. Charrue selon la revendication précédente, dans laquelle le capteur de force transversale comprend des éléments de capteur de force (22) associés aux bras inférieurs (11) du dispositif d'attelage (3) pour détecter des forces de traction/pression dans les bras inférieurs (11) et le dispositif de commande d'angle de braquage (16) comprend des moyens de commande destinés à la commande de l'actionneur de direction en fonction d'une différence des forces de traction et de pression dans des bras inférieurs (11) droits et gauche de telle manière que les forces de traction/pression détectées dans les bras inférieurs (11) deviennent aussi égales que possible.

6. Charrue selon le préambule de la revendication 1 ou l'une des revendications précédentes, dans laquelle
un dispositif de commande d'entraînement de roue (15) est prévu pour commander le couple et la vitesse de rotation de l'entraînement de roue (13) en fonction d'une force de traction induite par le tracteur dans le dispositif d'attelage (3) et d'un patinage de roue de la roue de charrue (4), le dispositif de commande d'entraînement de roue (15) comportant un régulateur de couple (19) destiné à réguler le couple de l'entraînement de roue de telle manière que la force de traction dans le dispositif d'attelage (3) devient minimale, et un régulateur de vitesse de rotation (23) destiné à réguler la vitesse de rotation de l'entraînement de roue de telle manière que le patinage de la roue de charrue devient minimal.

7. Charrue selon la revendication précédente, dans laquelle le régulateur de couple (19) est réalisé de telle manière que le couple d'entraînement de roue est limité quand la force de traction dans le dispositif d'attelage (3) devient nulle ou négative dans le sens de la marche (20).

8. Charrue selon l'une des deux revendications précédentes, dans laquelle le régulateur de couple comporte une entrée de signal de force de traction pour un signal de force de traction d'un capteur de force associé au dispositif d'attelage (3) et commande le couple de l'entraînement de roue (13) en fonction dudit signal de force.

9. Charrue selon l'une des revendications précédentes, dans laquelle le régulateur de vitesse (23) comporte une entrée de signal de vitesse de marche pour un signal de vitesse de marche d'un capteur de vitesse de marche et une entrée de signal de vitesse périphérique de roue pour un signal de vitesse périphérique de roue, qui indique la vitesse périphérique de roue de la roue de charrue (4) et comprend des moyens de commande destinés à limiter la vitesse de rotation de l'entraînement de roue (13) quand la vitesse périphérique de roue détectée dépasse la vitesse de marche.

10. Charrue selon l'une des revendications précédentes, dans laquelle l'entraînement de roue (13) comporte un moteur électrique.

11. Charrue selon l'une des revendications précédentes, dans laquelle l'entraînement de roue (13) est réalisé comme entraînement de roue indépendant et est associé à une roue de charrue (4) individuelle.

12. Charrue selon l'une des revendications précédentes, dans laquelle l'entraînement de roue (13) est réalisé sous la forme d'un entraînement sur moyeu de roue, pour lequel le moteur, le cas échéant avec un mécanisme de transmission, se trouve logé sur le moyeu de la roue (4), de préférence intégré dans le corps du moyeu de roue.
